# EUROPEAN PATENT APPLICATION

(11) **EP 4 592 212 A1**
(43) Date of publication of application: **30.07.2025**
(21) Application number: 22964368.9
(22) Date of filing: 31.10.2022
(51) Int. Cl.: B65D 43/08, B65D 45/22, B65D 45/32

(54) **OPENING/CLOSING MEMBER**

(71) Applicant: Mutsubishi Rubber Co., Ltd., Nagata-ku Kobe-shi, Hyogo 653-0038 (JP)
(72) Inventor: IDO Masatsugu, Yokohama-shi, Kanagawa 220-6001 (JP); HIGASHIMOTO Naoyuki, Kobe-shi, Hyogo 651-2228 (JP)
(74) Representative: Piotrowicz, Pawel Jan Andrzej
(86) International application number: PCT/JP2022/040806
(87) International publication number: WO 2024/095346

(57) **Abstract**

An opening and closing member includes a top surface portion that covers an opening in a closed state where the opening is closed, a grip portion that extends to an outer edge of the top surface portion and grips an outer periphery of an opening end of a container main body in the closed state, and a depressurization path that penetrates into a tubular space formed in the grip portion and is attached to the grip portion, and depressurizes the space. The top surface portion has an inner surface facing an inside of the container main body in the closed state where the opening is closed. The inner surface includes an annular inner surface annular region extending along an inner periphery of the opening end of the container main body. The inner surface annular region includes a protruding region portion provided with a plurality of protrusions protruding from the inner surface, and a flat region portion where the protrusion is not provided.

## Description

### Technical Field

The present invention relates to an opening and closing member that opens and closes an opening by being attached to and detached from the opening of a container main body.

### Background Art

Currently, for example, in order to produce a solid preparation such as a tablet or a powder in a solid preparation factory of a pharmaceutical company or the like, a batch production method is basically used. Therefore, the use of containers is indispensable for transporting and storing raw materials and intermediate products. Further, airtightness is required for the container so that the solid preparation in the container is not deteriorated during storage.

Here, in order to ensure airtightness of the container, it is common to seal the container by fastening the lid and the container main body with a clamp band via packing (see, for example, Patent Literature 1). As a device for opening and closing the lid of the container thus airtight, a robot for opening and closing a clamp band is known (see, for example, Non Patent Literature 1). This robot is able to open and close the clamp band without manual intervention. As a result, labor saving can be achieved in the production line.

However, in a case where the above-described general technology is used, at least three robots are required to automatically open and close the lid, and there is a problem that the cost is too high. Further, manual labor is required to perform detailed work when opening and closing the lid. However, the operation of clamping or releasing the clamp by a person is difficult because it is necessary to cope with the work of raising the clamp lever using fingertips.

Therefore, in recent years, a lid that enables automatic opening and closing a container without using a clamp band has been developed. Such a lid is used in many situations including solid preparation factories.

### Citation List

### Patent Literature

Patent Literature 1: Japanese Utility Model Registration No. 3156962

### Non Patent Literature

Non Patent Literature 1: OMC Co., Ltd., "Robotic detachment system", [online], [Searched on November 9, 2020], Internet <URL:http://omc.jpn.org/2012/product_medical/cross_mix/robo tdesorptionsystem_medical.htm>

### Summary of Invention

### Technical Problem

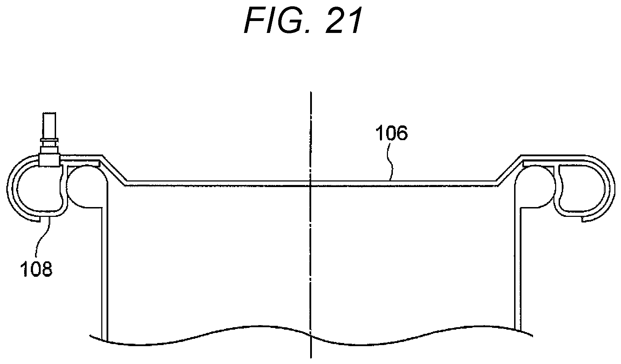

However, as illustrated in Fig. 21, this lid has a two-part configuration of a metal lid 106 and a resin tube seal 108. Therefore, although opening and closing of the lid 106 is automated, it is necessary to disassemble the lid at the time of cleaning. That is, it has not been possible to cope with full automation including cleaning. Further, in addition, there is a problem that the cost of the metal lid 106 portion increases.

An object of the present invention is to provide an inexpensive opening and closing member that can be washed by automatic washing.

### Solution to Problem

An embodiment of the present invention is an opening and closing member that opens and closes an opening by being attached to and detached from the opening of a container main body. The opening and closing member includes a top surface portion that covers the opening in a closed state where the opening is closed, a grip portion that extends to an outer edge of the top surface portion and grips an outer periphery of an opening end of the container main body in the closed state, and a depressurization path that penetrates into a tubular space formed in the grip portion and is attached to the grip portion, and depressurizes the space. The top surface portion has an inner surface facing an inside of the container main body in the closed state where the opening is closed. The inner surface includes an annular inner surface annular region extending along an inner periphery of the opening end of the container main body. The inner surface annular region includes a protruding region portion provided with one or a plurality of protrusions protruding from the inner surface, and a flat region portion where the protrusion is not provided.

The flat region portion forms an opening that allows a region where an opening edge of the container main body is disposed to communicate with a region near a center on the inner surface of the top surface portion. Even if cleaning liquid or water enters the portion sandwiched between the protrusion and the grip portion, the cleaning liquid or water can flow out through the opening. Therefore, in the top surface portion, the cleaning liquid or water is less likely to be accumulated in the region where the opening edge of the container main body is disposed. As a result, drainage of the opening and closing member is improved, so that a cleaning operation can be easily executed.

In the above opening and closing member, a shape of the top surface portion may be a disk. The protruding region portion may be provided with a first protrusion and a second protrusion arranged so as to sandwich a central axis of the top surface portion. With this configuration as well, the cleaning operation can be easily executed.

In the above-described opening and closing member, an area of the flat region portion occupying the inner surface annular region may be larger than an area of the protruding region portion occupying the inner surface annular region. With this configuration as well, the cleaning operation can be easily executed.

In the above opening and closing member, the inner surface of the top surface portion may further include an inner surface inner region surrounded by the inner surface annular region. The flat region portion of the inner surface annular region may be flush with the inner surface inner region. With this configuration as well, the cleaning operation can be easily executed.

In the above opening and closing member, the inner surface of the top surface portion may further include an inner surface inner region surrounded by the inner surface annular region. A step may be present between the flat region portion of the inner surface annular region and the inner surface inner region. With this configuration as well, the cleaning operation can be easily executed.

In the above opening and closing member, the inner surface of the top surface portion may further include an inner surface inner region surrounded by the inner surface annular region. The flat region portion of the inner surface annular region may protrude from the inner surface inner region. With this configuration as well, the cleaning operation can be easily executed.

In the above opening and closing member, the depressurization path may include a through hole penetrating the tubular space of the grip portion, a valve that switches the through hole between a closed state and an open state, a switching unit that brings the valve into the open state when receiving a pressing force and brings the valve into the closed state when the pressing force is removed, and an elastic force applying portion that presses the valve against the opening of the through hole. With this depressurization path, a state of internal pressure of the tubular space of the grip portion can be preserved. Furthermore, the operation of switching the internal pressure of the tubular space from the depressurized state to the atmospheric pressure state can be easily executed.

### Advantageous Effects of Invention

According to the present invention, it is possible to provide an inexpensive opening and closing member that can be washed by automatic washing.

### Brief Description of Drawings

Fig. 1 is a schematic perspective view illustrating a container according to an embodiment.
Fig. 2 is a cross-sectional view of a main part illustrating a main part of a lid of the container according to the embodiment.
Fig. 3(a) is a plan view illustrating an inner surface of the lid of the container according to the embodiment. Fig. 3(b) is a view for describing an effect of the lid of the container according to the embodiment in which an end of a protrusion is rounded. Fig. 3(c) is a view for describing an effect of the lid of the container in which the end of the protrusion is a flat surface.
Fig. 4(a) is a cross-sectional view taken along line IIIa-IIIa of Fig. 3(a). Fig. 4(b) is a cross-sectional view taken along line IIIb-IIIb in Fig. 3(a).
Fig. 5 is a view illustrating some regions set on the inner surface of the lid of the container according to the embodiment in a visualized manner.
Fig. 6 is a cross-sectional view of a depressurization path.
Fig. 7(a) is a cross-sectional view of a main part illustrating a main part of a lid in an atmospheric pressure closed state. Fig. 7(b) is a cross-sectional view of a main part illustrating the main part of the lid in the depressurized and closed state.
Fig. 8 is a cross-sectional view of a main part illustrating the main part of the lid in an atmospheric pressure state and an open state.
Fig. 9 is a schematic view illustrating a state in which an opening and closing robot opens and closes the lid of the container in an opening and closing mechanism according to the embodiment.
Fig. 10 is a view describing a procedure of opening and closing the lid of the container with the opening and closing robot in the opening and closing mechanism according to the embodiment.
Fig. 11 is a view illustrating a state in which a space of a grip portion is depressurized when the lid of the container is opened in the opening and closing mechanism according to the embodiment.
Fig. 12 is a view illustrating a state in which the space of the grip portion is depressurized when the lid of the container is closed in the opening and closing mechanism according to the embodiment.
Fig. 13 is a view illustrating a state in which a top surface portion of the lid is pushed up and the lid is not removed when an internal pressure of the container according to the embodiment increases.
Fig. 14 is a view in which a recess is formed on an upper surface of the top surface portion in the lid of the container according to the embodiment.
Fig. 15 is a view illustrating a state in which a container is stacked on the lid of the container illustrated in Fig. 14.
Fig. 16 is a view in which a recess is formed on the upper surface of the top surface portion in the lid of the container according to the embodiment.
Fig. 17 is a view in which a width of the protrusion is largely widened toward a center side of the lid in the lid of the container according to the embodiment.
Fig. 18 is a view in which a layer made of metal is provided on the lid in the lid of the container according to the embodiment.
Fig. 19 is a view in which a layer made of metal is formed between surface layers of the lid in the lid of the container according to the embodiment.
Fig. 20 is a view in which a layer made of metal is formed on an outer surface of the lid in the lid of the container according to the embodiment.
Fig. 21 is a cross-sectional view of a main part illustrating a main part of a lid of a conventional container.

### Description of Embodiments

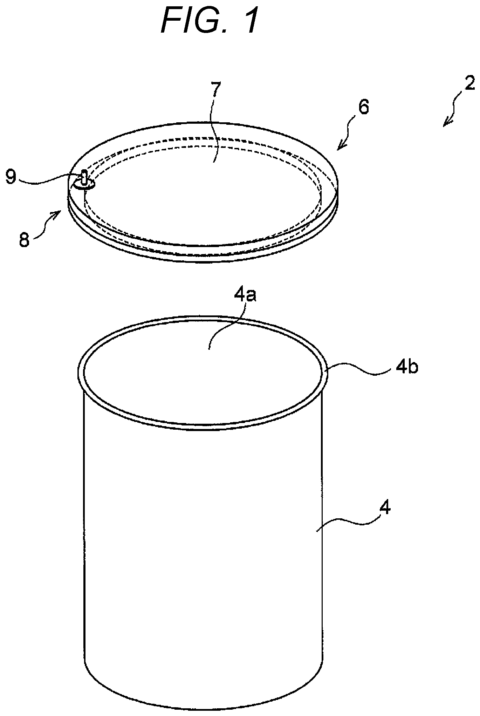

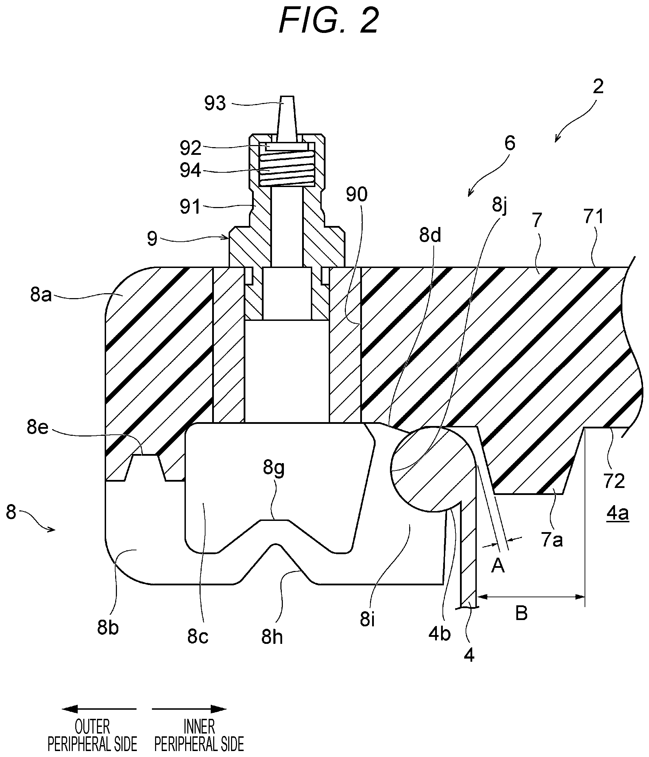

Hereinafter, an opening and closing member according to an embodiment of the present invention will be described with reference to the drawings as an example of opening and closing a lid of a small can for storing a solid preparation such as a tablet or a powder in a solid preparation factory of a pharmaceutical company or the like. Fig. 1 is a schematic perspective view illustrating a container according to an embodiment, and Fig. 2 is a cross-sectional view of a main part illustrating a main part of the container according to the embodiment of the present invention. As illustrated in Fig. 1, a container 2 includes a container main body 4 and a lid 6 (opening and closing member).

The container main body 4 is a bottomed cylindrical member formed of metal, and an extending portion 4b having a substantially circular cross section extending radially outward with respect to an outer peripheral surface of the container main body 4 is formed on an opening 4a side of the container main body 4.

The lid 6 is a disk-shaped member that opens and closes the opening 4a by being attached to and detached from the opening 4a of the container main body 4. The lid 6 is a rubber member made of a rubber material such as silicone or ethylene-propylene-diene rubber (EPDM). The lid 6 includes a top surface portion 7, a grip portion 8, and a depressurization path 9.

As illustrated in Fig. 2, the top surface portion 7 covers the opening 4a of the container main body 4 in a closed state where the opening 4a is closed. The top surface portion 7 forms a central portion of the disk-shaped lid 6. A protrusion 7a is formed on a lower outer edge on an inner peripheral side of the top surface portion 7.

The top surface portion 7 on which the protrusion 7a is formed will be described in more detail. The shape of the top surface portion 7 is generally a disk. The diameter of the top surface portion 7 is approximately the same as the diameter of the container main body 4. That is, in plan view, the container main body 4 and the top surface portion 7 overlap each other. The top surface portion 7 includes a top surface portion outer surface 71 and a top surface portion inner surface 72.

The top surface portion outer surface 71 has a circular shape in plan view. The top surface portion outer surface 71 is exposed to the outside of the container main body 4 in the closed state where the opening 4a of the container main body 4 is closed. That is, the top surface portion outer surface 71 can be visually recognized in the closed state where the opening 4a of the container main body 4 is closed.

The top surface portion inner surface 72 is a back face with respect to the top surface portion outer surface 71. The shape of the top surface portion inner surface 72 is also circular in plan view. The top surface portion inner surface 72 is exposed to the inside of the container main body 4 in the closed state where the opening 4a of the container main body 4 is closed. That is, the top surface portion inner surface 72 cannot be visually recognized in the closed state where the opening 4a of the container main body 4 is closed.

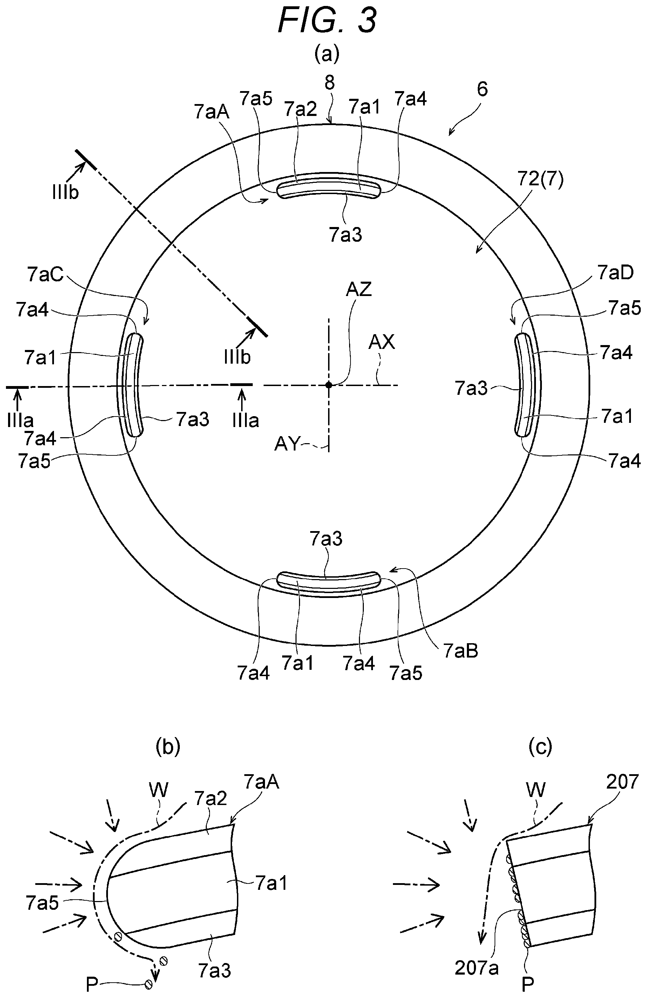

As illustrated in Fig. 3(a), the top surface portion inner surface 72 is provided with four protrusions 7aA, 7aB, 7aC, and 7aD. In the following description, when it is necessary to distinguish and describe the four protrusions, reference numerals "7aA, 7aB, 7aC, 7aD" are appropriately attached. When it is not necessary to distinguish and describe the four protrusions, reference numeral "7a" is assigned. The protrusions 7aA (first protrusions) and 7aB (second protrusions) are arranged at positions line-symmetric with respect to a first reference line AX passing through a central axis AZ. The protrusions 7aC (first protrusions) and 7aD (second protrusions) are arranged at positions line-symmetric with respect to a second reference line AY passing through the central axis AZ. That is, it can also be said that the four protrusions 7aA, 7aB, 7aC, and 7aD are arranged at positions that are rotationally symmetric with respect to the central axis AZ.

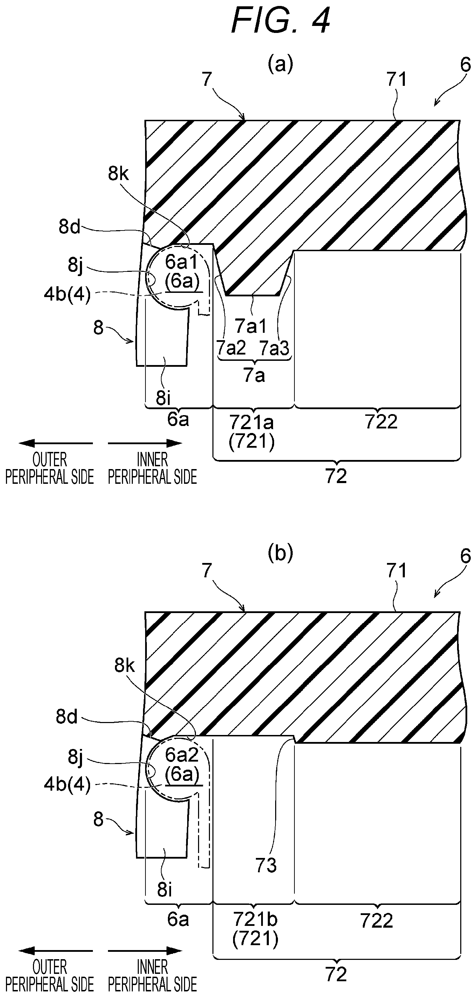

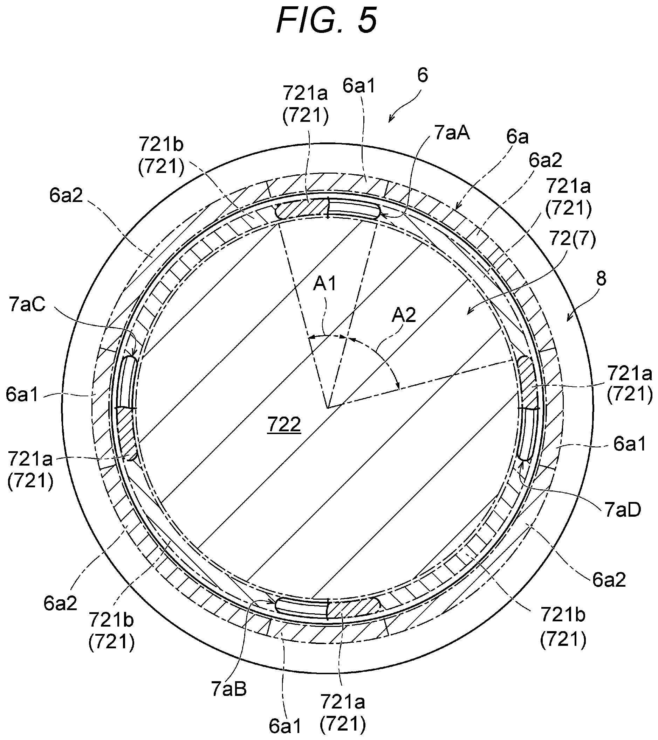

As illustrated in Fig. 4(a), a cross-sectional shape of the protrusion 7a is trapezoidal. The width of a proximal end of the protrusion 7a is larger than the width of a distal end of the protrusion 7a. The protrusion 7a has a protrusion lower surface 7a1, a pair of protrusion inclined surfaces 7a2 and 7a3, and a pair of protrusion ends 7a4 and 7a5 (see Fig. 3(a)). As illustrated in Fig. 3(a), for example, the protrusion end 7a4 of the first protrusion 7aA faces the protrusion end 7a5 of the fourth protrusion 7aD in the circumferential direction. A flat region portion 721b to be described later is formed between the protrusion end 7a4 of the first protrusion 7aA and the protrusion end 7a5 of the fourth protrusion 7aD (see Fig. 5). Each of the pair of protrusion ends 7a4 and 7a5 may be a rounded curved surface instead of a flat surface. It can also be said that the protrusion ends 7a4 and 7a5 having such shapes are provided with so-called R (round). With the protrusion ends 7a4 and 7a5 including the rounded curved surface, a cleaning liquid W easily flows along surfaces of the protrusion ends 7a4 and 7a5 (see Fig. 3(b)). As a result, attached matter P attached to the surfaces of the protrusion ends 7a4 and 7a5 is swept away by the cleaning liquid W, so that the surfaces of the protrusion ends 7a4 and 7a5 can be cleaned. That is, the lid 6 can be easily cleaned.

On the other hand, as illustrated in Fig. 3(c), when an end 207a of the protrusion 207 is a flat surface, the flow of the cleaning liquid W tends to be one direction. For example, the cleaning liquid W may flow away from the end 207a of the protrusion 207. In this case, the attached matter P attached to a surface or a corner portion of the end 207a is less likely to flow. As a result, good cleaning results may not be obtained.

Among the pair of protrusion inclined surfaces 7a2 and 7a3, the protrusion inclined surface 7a2 facing the outer peripheral side faces the grip portion 8. In the case of a closed state where the opening 4a of the container main body 4 is closed, the protrusion inclined surface 7a2 faces the extending portion 4b of the container main body 4. With the protrusion inclined surface 7a2, the extending portion 4b of the container main body 4 can be guided to a recess 8j of the grip portion 8 when the lid 6 is disposed on the container main body 4.

The top surface portion inner surface 72 includes an inner surface annular region 721 and an inner surface inner region 722. The inner surface annular region 721 extends in a circumferential direction along the opening 4a of the container main body 4. That is, the inner surface annular region 721 has a thin annular shape. An outer peripheral end of the inner surface annular region 721 can also be defined as a boundary between the top surface portion 7 and the grip portion 8. The extending portion 4b of the container main body 4 is positioned outside the inner surface annular region 721. The inner surface inner region 722 is a portion inside the inner surface annular region 721. The inner surface inner region 722 may be defined as a portion surrounded by the inner surface annular region 721. When the entire portion surrounded by the inner surface annular region 721 is defined as the inner surface inner region 722, the inner surface inner region 722 has a circular shape.

As illustrated in Fig. 5, the inner surface annular region 721 includes a protruding region portion 721a and a flat region portion 721b. The protruding region portion 721a is a portion where the above-described protrusions 7aA, 7aB, 7aC, and 7aD are provided. The flat region portion 721b is a portion where the protrusions 7aA, 7aB, 7aC, and 7aD are not provided. That is, the shapes of the protrusions 7aA, 7aB, 7aC, and 7aD are not continuous circular rings in plan view. The shapes of the protrusions 7aA, 7aB, 7aC, and 7aD are circular arcs.

The area of the protruding region portion 721a occupying the inner surface annular region 721 is smaller than the area of the flat region portion 721b occupying the inner surface annular region 721. In other words, the area of the flat region portion 721b occupying the inner surface annular region 721 is larger than the area of the protruding region portion 721a occupying the inner surface annular region 721. This difference in area can also be described using a central angle defining the protruding region portion 721a and a central angle defining the flat region portion 721b. A central angle A1 defining the protruding region portion 721a is smaller than a central angle A2 defining the flat region portion 721b.

Each of the plurality of protruding region portions 721a is provided with the protrusion 7a, and thus protrudes with respect to the inner surface inner region 722. On the other hand, since the flat region portion 721b is not provided with the protrusion 7a, it does not protrude with respect to the inner surface inner region 722. The flat region portion 721b may be substantially flush with the inner surface inner region 722. In addition, a step 73 (see Fig. 4(b)) may be provided between the flat region portion 721b and the inner surface inner region 722. That is, the flat region portion 721b is not flush with the inner surface inner region 722, and the flat region portion 721b may slightly protrude with respect to the inner surface inner region 722 or may be slightly recessed with respect to the inner surface inner region 722. In terms of the relationship with the protrusion 7a, the flat region portion 721b can also be defined as a surface closer to the inner surface inner region 722 than the protrusion lower surface 7a1 of the protrusion 7a along the direction of the central axis AZ. Further, the grip portion 8 to be described later includes a contact surface portion 8k with which the extending portion 4b of the container main body 4 is brought into contact. The flat region portion 721b may be substantially flush with the contact surface portion 8k.

The lid 6 includes an extending portion arrangement region 6a in which the extending portion 4b of the container main body 4 is arranged. The extending portion arrangement region 6a has an annular groove shape. The extending portion arrangement region 6a includes a portion 6a1 (see Fig. 4(a)) sandwiched between the protrusion 7a and the recess 8j of the grip portion 8, and a portion 6a2 (see Fig. 4(b)) only facing the recess 8j of the grip portion 8. The portion 6a1 sandwiched between the protrusion 7a and the recess 8j corresponds to the protruding region portion 721a described above. The portion 6a2 only facing the grip portion 8 corresponds to the above-described flat region portion 721b. That is, the flat region portion 721b can also be said to be an opening that allows the extending portion arrangement region 6a where the extending portion 4b is arranged to communicate with the inner surface inner region 722 of the top surface portion 7.

For example, when the lid 6 is cleaned, the cleaning liquid or water may be accumulated in the portion 6a1 sandwiched between the protrusion 7a and the recess 8j of the grip portion 8 in the extending portion arrangement region 6a. If the protrusion 7a has an annular shape without a break, there is no place for the cleaning liquid or water to escape, so that the cleaning liquid or water tends to accumulate in the portion 6a1 sandwiched between the protrusion 7a and the grip portion 8.

On the other hand, in the top surface portion 7, the flat region portion 721b forms an opening that allows the extending portion arrangement region 6a and the inner surface inner region 722 of the top surface portion 7 to communicate with each other. Even if the cleaning liquid or water enters the portion 6a1 sandwiched between the protrusion 7a and the grip portion 8, the cleaning liquid or water can flow out of the extending portion arrangement region 6a through the opening. Therefore, in the top surface portion 7, the cleaning liquid and water are less likely to be accumulated in the extending portion arrangement region 6a. In short, since the lid 6 drains well, the cleaning operation becomes easier.

Referring again to Fig. 2. The grip portion 8 extends on the outer periphery of the top surface portion 7 and grips the outer periphery of the opening end of the container main body 4 in the closed state. The grip portion 8 includes a first grip portion 8a extending from the top surface portion 7 and a second grip portion 8b located below the first grip portion 8a.

The first grip portion 8a is integrally molded seamlessly by the same rubber material as that of the top surface portion 7. The hardness of the first grip portion 8a is the same as the hardness of the top surface portion 7. The second grip portion 8b is attached below the first grip portion 8a. A flow path 90 for attaching the depressurization path 9 is formed above the first grip portion 8a. Air is taken in and out of a tubular space 8c to be described later through the depressurization path 9. Note that a joint portion 8d on an inner peripheral side of the first grip portion 8a and the second grip portion 8b is welded at the time of molding the lid 6. Thus, it is possible to prevent the first grip portion 8a and the second grip portion 8b from separating when a load is applied to the joint portion 8d. Note that the first grip portion 8a is bonded to the joint portion 8e on an outer peripheral side of the second grip portion 8b with an adhesive.

The tubular space 8c is formed between the first grip portion 8a and the second grip portion 8b. The tubular space 8c is a region surrounded by the first grip portion 8a and the second grip portion 8b. In this manner, by configuring the grip portion 8 with the first grip portion 8a and the second grip portion 8b, it is possible to simplify the structure for sealing and releasing the sealing of the container 2.

An inner protrusion 8g and a protruding bottom portion 8h having an inverted M cross-sectional shape are formed at the lower end of the second grip portion 8b. The inner protrusion 8g protrudes inward of the space 8c. The protruding bottom portion 8h forms a bottom portion outside the space 8c. The second grip portion 8b is provided with a jaw portion 8i protruding toward the inner peripheral side. The recess 8j recessed in a substantially semicircular cross section is formed on the inner peripheral upper side of the jaw portion 8i. The recess 8j is engaged with the extending portion 4b when the lid 6 is closed.

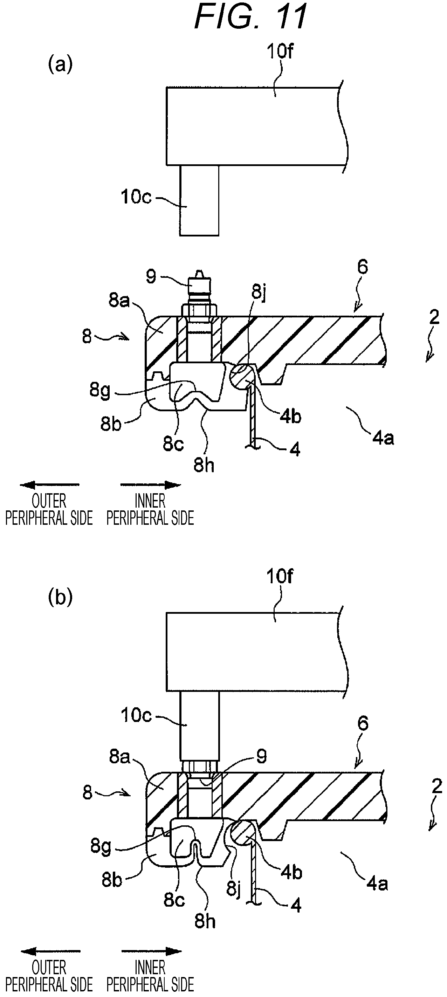

The second grip portion 8b is configured so that the inner protrusion 8g and the protruding bottom portion 8h can bend and stretch. By bending and stretching the inner protrusion 8g and the protruding bottom portion 8h which are bent and stretched portions, the space 8c (second grip portion 8b) is elastically deformed into a contracted shape (see Fig. 11(b)) and a restored shape (see Fig. 2).

Note that, in order to facilitate this elastic deformation, the second grip portion 8b is formed of a rubber material having hardness lower than that of the first grip portion 8a. That is, the hardness of the first grip portion 8a is larger than the hardness of the second grip portion 8b. As described above, the second grip portion 8b is easily elastically deformed, so that the container 2 can be easily sealed and unsealed.

The second grip portion 8b is disposed along the outer peripheral surface of the container main body 4 when the lid 6 is closed. The lid 6 is fitted to the container main body 4 from the outside. The grip portion 8 is disposed along the extending portion 4b formed on the outer periphery of the container main body 4. As a result, it is possible to prevent the formulation from accumulating around the inner peripheral edge of the container main body 4 when the container main body 4 is inclined and the formulation is discharged.

Note that the inner diameter of the second grip portion 8b is formed to be smaller than the outer diameter of the container main body 4. Thus, in a state where the second grip portion 8b is engaged with the extending portion 4b, the outer peripheral surface of the container main body 4 is tightened by the contraction force of the grip portion 8. Accordingly, airtightness of the container 2 is maintained.

The depressurization path 9 is a nozzle penetrating from the top surface of the first grip portion 8a to the tubular space 8c via the flow path 90. The depressurization path 9 allows a depressurizing unit 10c (see Fig. 11(a)) to be described later to communicate with the space 8c. The depressurization path 9 is made of metal. The depressurization path 9 is adhered (welded) to the inner peripheral surface of the flow path 90. Thus, the formulation does not enter the adhesive portion. As a result, the depressurization path 9 is not removed from the first grip portion 8a even during cleaning.

The depressurization path 9 will be described in more detail.

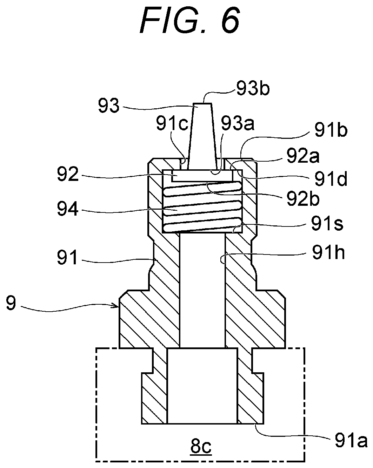

As illustrated in Fig. 6, the depressurization path 9 includes a depressurization path body 91 (main body), a valve 92, a switching pin 93 (switching unit), and a spring 94 (elastic force applying portion). The cylindrical depressurization path body 91 is provided with a through hole 91h. The through hole 91h extends from an inner end 91a to an outer end 91b of the depressurization path body 91. The space 8c of the grip portion 8 and an external space can be connected by the through hole 91h. An outer opening 91c provided at the outer end 91b is switched between an open state and a closed state by the valve 92.

The valve 92 is disposed so as to be able to abut on an end inner surface 91d of the outer end 91b. A valve main surface 92a faces the outer end 91b. That is, the valve main surface 92a faces the end inner surface 91d. The valve main surface 92a is exposed from the outer opening 91c. A valve back surface 92b faces the inner end 91a.

The spring 94 is disposed between the valve back surface 92b and the step portion 91s of the depressurization path body 91. The spring 94 applies a pressing force to the valve 92. By this pressing force, the valve 92 is pressed against the outer end 91b, and as a result, the outer opening 91c is closed. For example, when the space 8c is in the depressurized state, the valve 92 receives a force caused by a differential pressure between the internal pressure of the space 8c and the atmospheric pressure. This force acts in a direction that separates the valve 92 from the outer end 91b. That is, this force acts in a direction of contracting the spring 94. Even if a force due to the differential pressure between the internal pressure and the atmospheric pressure acts on the spring 94, the spring 94 can oppose the force. In other words, even if the force caused by the differential pressure between the internal pressure and the atmospheric pressure acts on the spring 94, the spring 94 does not contract. That is, the spring 94 can generate a force larger than the force caused by the differential pressure between the internal pressure and the atmospheric pressure. As a result, the depressurization path 9 can maintain a depressurized state.

The switching pin 93 is attached to the valve main surface 92a. A pin base end 93a of the switching pin 93 is fixed to the valve main surface 92a. A pin tip 93b of the switching pin 93 is disposed at a position protruding from the depressurization path body 91. When no force is applied to the pin tip 93b, the closed state is maintained. When a force is applied to the pin tip 93b, the pin tip 93b is pushed, so that the closed state is switched to the open state.

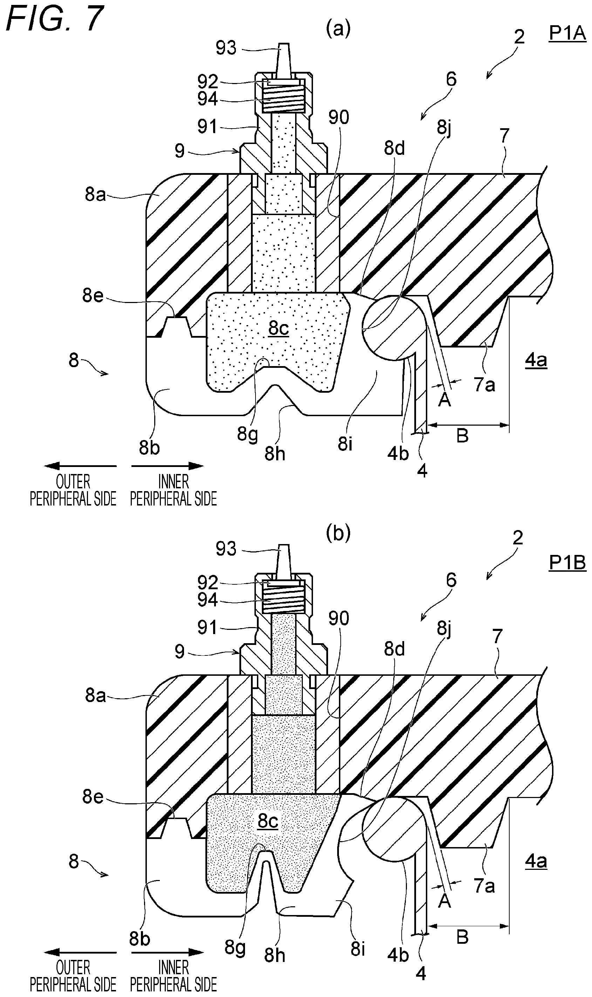

The depressurization path 9 has a function of maintaining the internal pressure of the space 8c. For example, the depressurization path 9 can maintain a state in which the internal pressure of the space 8c is the same as the atmospheric pressure (see Fig. 7(a)). A state in which the internal pressure of the space 8c is the same as the atmospheric pressure is referred to as an "atmospheric pressure closed state P1A". The "atmospheric pressure closed state P1A" may be defined as a state in which the grip portion 8 holds the extending portion 4b of the container main body 4. Therefore, the internal pressure of the space 8c in the "atmospheric pressure closed state P1A" does not need to completely coincide with the atmospheric pressure. Even if there is a differential pressure between the internal pressure of the space 8c and the atmospheric pressure, the state may be referred to as an "atmospheric pressure closed state P1A" as long as the grip portion 8 holds the extending portion 4b of the container main body 4 (see Fig. 11(a)).

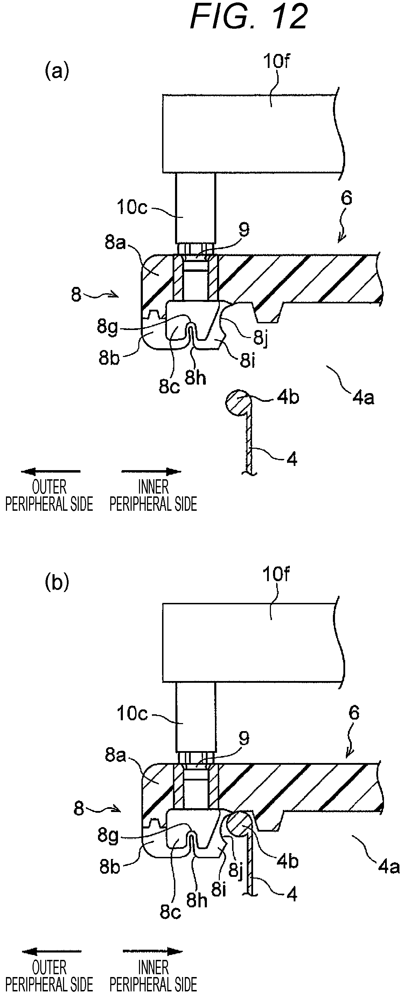

The depressurization path 9 can also maintain a state where the internal pressure of the space 8c is lower than the atmospheric pressure (see Fig. 7(b)). A state in which the internal pressure of the space 8c is lower than the atmospheric pressure is referred to as a "depressurized and closed state P1B". The "depressurized and closed state P1B" may be defined as a state in which the grip portion 8 does not hold the extending portion 4b of the container main body 4 (see Figs. 11(b), 12(a), and 12(b)). That is, the "depressurized and closed state P1B" may be defined as a state in which the grip portion 8 is deformed so that the extending portion 4b of the container main body 4 can be attached and the extending portion 4b of the container main body 4 can be removed.

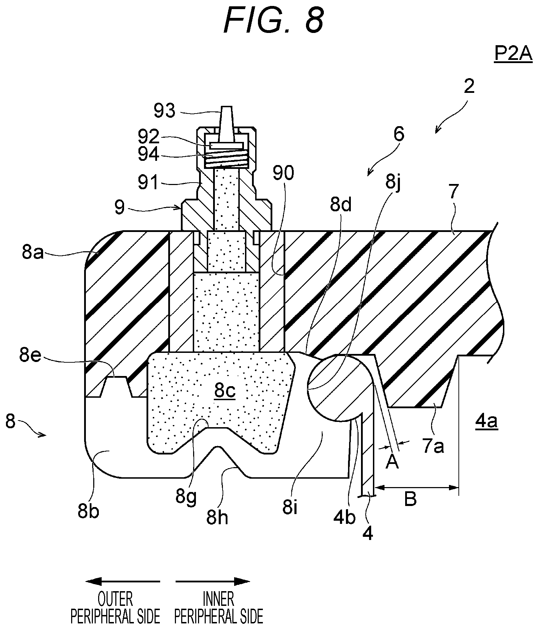

The depressurization path 9 has a function of communicating the space 8c of the grip portion 8 with the external space when the internal pressure of the space 8c is changed. As illustrated in Fig. 8(a), when the space 8c of the grip portion 8 is in the atmospheric pressure open state P2A, the space 8c of the grip portion 8 can be depressurized by communicating the space 8c of the grip portion 8 with the external space. The depressurization path 9 itself does not have a function of depressurizing the space 8c of the grip portion 8. When the space 8c of the grip portion 8 communicates with the external space, a depressurizing unit 10c (see Fig. 11(a) and the like) is connected. Then, by operating the depressurizing unit 10c, the space 8c of the grip portion 8 is switched from an atmospheric pressure state to a depressurized state.

As illustrated in Fig. 7(b), when the space 8c of the grip portion 8 is in the depressurized and closed state P1B, the space 8c of the grip portion 8 can be switched from the depressurized state to the atmospheric pressure state by communicating the space 8c of the grip portion 8 with the external space. When the valve 92 is opened in the depressurized and closed state P1B, the atmosphere flows into the space 8c from the outer opening 91c through the through hole 91h. Therefore, to switch the space 8c of the grip portion 8 from the depressurized state to the atmospheric pressure state, it is sufficient that a pressing force is applied to the switching pin 93 by some device, and a special device such as the depressurizing unit 10c is not required.

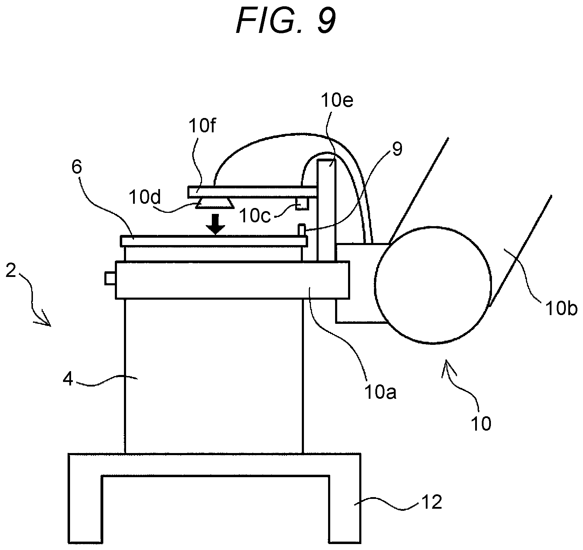

Fig. 9 is a schematic view illustrating a state in which the lid 6 of the container 2 is opened and closed by the opening and closing robot 10 in the container 2 including the lid 6 according to the embodiment. As illustrated in Fig. 9, the opening and closing of the lid 6 is performed by placing the container 2 on a workbench 12 by the opening and closing robot 10. The opening and closing robot 10 includes a grip portion 10a, an arm 10b, and a vertical movement unit 10f (movement unit). The grip portion 10a grips the container 2. The arm 10b moves the container 2 gripped by the grip portion 10a. The vertical movement unit 10f (moving portion) includes the depressurizing unit 10c and an opening/closing unit 10d below, and moves the lid 6 up and down along a guide 10e extending in a vertical direction.

Here, the depressurizing unit 10c is attached to the depressurization path 9 when the lid 6 is opened and closed. The depressurizing unit 10c depressurizes the space 8c of the grip portion 8 via the depressurization path **9.** The opening/closing unit 10d includes a sucker and the like. The opening/closing unit 10d adheres to the top surface of the lid 6 by sucking to open and close the lid 6.

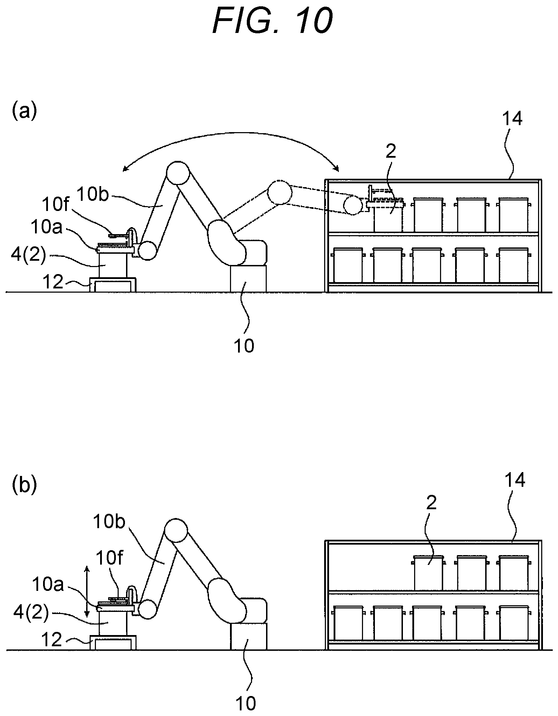

Next, a procedure for opening and closing the lid 6 of the container 2 by the opening and closing robot 10 will be described. First, as illustrated in Fig. 10, in a solid preparation factory, an opening and closing robot 10, a shelf 14 storing a container 2, and a workbench 12 are arranged at predetermined places, respectively. Here, in the case of opening the lid 6 of the container 2, as illustrated in Fig. 10(a), the opening and closing robot 10 first moves the arm 10b. Next, the opening and closing robot 10 grips the container 2 with the lid 6 closed displayed on the shelf 14 using the grip portion 10a.

Next, the opening and closing robot 10 moves the arm 10b to transfer the container 2 onto the workbench 12. Note that, at this point, as illustrated in Fig. 11(a), the recess 8j of the grip portion 8 is engaged with the extending portion 4b of the container main body 4. That is, the container 2 is sealed by the lid 6. Next, as illustrated in Fig. 10(b), the opening and closing robot 10 lowers the vertical movement unit 10f along the guide 10e. Thus, the opening/closing unit 10d comes into contact with the top surface of the lid 6. Furthermore, the depressurizing unit 10c is attached to the depressurization path 9.

In this state, the depressurizing unit 10c presses the switching pin 93. Accordingly, the valve 92 is switched from the atmospheric pressure closed state S2A (Fig. 7(a)) to the atmospheric pressure open state S2B (Fig. 8).

Next, as illustrated in Fig. 11(b), the opening and closing robot 10 operates the depressurizing unit 10c to suck the fluid in the space 8c of the grip portion 8 through the depressurization path 9. As a result, the inside of the space 8c is depressurized (depressurization step). Thus, since the space 8c has a negative pressure, in the second grip portion 8b, the inner protrusion 8g and the protruding bottom portion 8h move to the outer peripheral side, and the space 8c is elastically deformed into a contracted shape. As a result, a gap is formed between the recess 8j and the extending portion 4b. Therefore, since the close contact state between the recess 8j and the extending portion 4b is released, the lid 6 can be removed from the container main body 4.

In this state, the opening and closing robot 10 adheres to the top surface of the lid 6 with the opening/closing unit 10d by sucking. Next, the opening and closing robot 10 moves the lid 6 from the opening 4a of the container main body 4 by raising the vertical movement unit 10f along the guide 10e. As a result, the lid 6 of the container 2 is opened (opening step).

Note that, in the opening step, the opening/closing unit 10d needs to be adhering to the top surface of the lid 6 by sucking. However, in the opening step, the depressurizing unit 10c need not be connected to the depressurization path 9. This is because the lid 6 can maintain the depressurized and closed state P1B as illustrated in Fig. 7(b). For example, after the depressurization step is completed, a step of removing the depressurizing unit 10c from the depressurization path 9 is performed. After the removing step, an opening step may be performed.

The lid 6 can maintain a state in which the second grip portion 8b is elastically deformed into a contracted shape (see Fig. 7(b)) by the function of the depressurization path 9. In this state, for example, a cleaning step may be executed. In the state of being elastically deformed into the contracted shape, since the periphery of the joint portion 8e is largely opened, cleaning can be easily performed.

Next, a case where the lid 6 of the container 2 is closed will be described. The opening and closing robot 10 moves the container 2 with the empty lid 6, that is, the container main body 4, onto the workbench 12. Specifically, the opening and closing robot 10 positions the lid 6 immediately above the container main body 4, the lid 6 being in a state where the top surface is adhered to the opening/closing unit 10d by sucking. Next, as illustrated in Fig. 12(a), the opening and closing robot 10 operates the depressurizing unit 10c in this state to suck the fluid in the space 8c of the grip portion 8 via the depressurization path 9. As a result, the space 8c of the grip portion 8 is depressurized (depressurization step). Thus, since the space 8c has a negative pressure, the space 8c contracts.

Next, as illustrated in Fig. 12(b), the opening and closing robot 10 lowers the vertical movement unit 10f along the guide 10e as it is to cover the opening 4a of the container main body 4 with the lid 6 (closing step). In this case, since the space 8c contracts and the second grip portion 8b is deformed, the lower end of the jaw portion 8i hits the extending portion 4b and the operation of closing the lid 6 is not hindered. Note that, while the container main body 4 is made of metal, the lid 6 is made of a rubber material. As a result, contact between metals is avoided when the lid 6 is closed. Therefore, since the generation of the metal powder can be suppressed, it is possible to prevent the metal powder from being mixed into the preparation accommodated in the container main body 4. When the opening 4a is closed by the lid 6 by covering the opening 4a of the container main body 4 with the lid 6, the opening and closing robot 10 stops the depressurization by the depressurizing unit 10c (stopping step).

The above description is made when the space 8c of the grip portion 8 is in the atmospheric pressure closed state P1A. When the space 8c of the grip portion 8 is in the depressurized and closed state P1B, the depressurizing operation by the depressurizing unit 10c is not required. Therefore, when the space 8c of the grip portion 8 is in the depressurized and closed state P1B, the depressurization step and the stop step can be omitted.

When the depressurization by the depressurizing unit 10c is stopped, the fluid (outside air) flows into the space 8c through the depressurization path 9. Thus, since the pressure in the space 8c is restored from a negative pressure state, the cross-sectional shape of the second grip portion 8b is restored to the original state (see Fig. 11(a)). In this case, the inner protrusion 8g and the protruding bottom portion 8h move to the inner peripheral side, and the space 8c is elastically deformed into the restored shape. As a result, since the extending portion 4b and the recess 8j are engaged with each other and are brought into close contact with each other, the container main body 4 closed by the lid 6 is brought into an airtight state (airtight step). Note that, in the restored shape in which the container main body 4 is in the airtight state, the internal pressure of the space 8c and the external pressure of the grip portion 8 become equal, and it is possible to prevent the leakage of the fluid in the container 2. Equalization between the internal pressure of the space 8c and the external pressure of the grip portion 8 means that the internal pressure of the space 8c has become equal to the atmospheric pressure. In addition, the second grip portion 8b brings the container 2 into an airtight state with a restored shape. On the other hand, the second grip portion 8b releases the airtight state of the container 2 in the contracted shape.

Note that, in the airtight step, the depressurized and closed state P1B is switched to the atmospheric pressure closed state P1A. Therefore, it is not always necessary to use the depressurizing unit 10c when performing the airtight step. The operation of switching from the depressurized and closed state P1B to the atmospheric pressure closed state P1A is achieved by executing the operation of pushing the switching pin 93. For example, the operation of pushing the switching pin 93 may be executed using a part of the vertical movement unit 10f. With such a switching operation, it is not necessary to accurately connect the depressurizing unit 10c to the depressurization path 9. Therefore, the operation of switching from the depressurized and closed state P1B to the atmospheric pressure closed state P1A can be easily executed.

### <Actions and Effects>

The lid 6 which is an opening and closing member of this embodiment is attached to and detached from the opening of the container main body 4 to open and close the opening. The lid 6 includes the top surface portion 7 that covers an opening in a closed state where the opening is closed, the grip portion 8 that extends to an outer edge of the top surface portion 7 and grips an outer periphery of an opening end of the container main body 4 in the closed state, and a depressurization path 9 that penetrates into a tubular space 8c formed in the grip portion 8 and is attached to the grip portion 8, and depressurizes the space 8c. The top surface portion 7 has the top surface portion inner surface 72 facing the inside of the container main body 4 in the closed state where the opening is closed. The top surface portion inner surface 72 includes an annular inner surface annular region 721 extending along an inner circumference of the opening end of the container main body 4. The inner surface annular region 721 includes the protruding region portion 721a provided with one or a plurality of protrusions 7a protruding from the top surface portion inner surface 72, and the flat region portion 721b not provided with the protrusions 7a.

The flat region portion 721b forms an opening that allows a region where an opening edge of the container main body 4 is disposed to communicate with an inner region of the top surface portion inner surface 72 of the top surface portion 7. Even if cleaning liquid or water enters the portion sandwiched between the protrusion 7a and the grip portion 8, the cleaning liquid or water can flow out through the opening. Therefore, in the top surface portion 7, the cleaning liquid or water is less likely to be accumulated in the region where the opening edge of the container main body 4 is disposed. As a result, drainage of the opening and closing member is improved, so that a cleaning operation can be easily executed.

In the above-described embodiment, the shape of the top surface portion 7 is a disk. The protruding region portion 721a is provided with the first protrusion 7aA and the second protrusion 7aB arranged so as to sandwich the central axis AZ of the top surface portion 7. With this configuration as well, the cleaning operation can be easily executed.

In the above-described embodiment, the area of the flat region portion 721b occupying the inner surface annular region 721 is larger than the area of the protruding region portion 721a occupying the inner surface annular region 721. With this configuration as well, the cleaning operation can be easily executed.

In the above-described embodiment, the top surface portion inner surface 72 of the top surface portion 7 may further include the inner surface inner region 722 surrounded by the inner surface annular region 721. The flat region portion 721b of the inner surface annular region 721 may be flush with the inner surface inner region 722. With this configuration as well, the cleaning operation can be easily executed.

In the above-described embodiment, the top surface portion inner surface 72 of the top surface portion 7 may further include the inner surface inner region 722 surrounded by the inner surface annular region 721. A step 73 may be present between the flat region portion 721b of the inner surface annular region 721 and the inner surface inner region 722. With this configuration as well, the cleaning operation can be easily executed.

In the above-described embodiment, the top surface portion inner surface 72 of the top surface portion 7 may further include the inner surface inner region 722 surrounded by the inner surface annular region 721. The flat region portion 721b of the inner surface annular region 721 may protrude from the inner surface inner region 722. With this configuration as well, the cleaning operation can be easily executed.

In the above opening and closing member, the depressurization path 9 includes the depressurization path body 91 having the through hole 91h penetrating through the tubular space 8c of the grip portion 8, the valve 92 that switches the through hole 91h between a closed state and an open state, the switching pin 93 that brings the valve 92 into the open state when receiving a pressing force and brings the valve 92 into the closed state when the pressing force is removed, and the spring 94 that presses the valve 92 against an opening portion of the through hole 91h. With the depressurization path 9, the state of the internal pressure of the tubular space 8c of the grip portion 8 can be preserved. Furthermore, the operation of switching the internal pressure of the tubular space 8c from the depressurized state to the atmospheric pressure state can be easily executed.

The opening and closing member of the present embodiment further has the following effects.

With the opening and closing member of the present embodiment, since both the top surface portion 7 and the grip portion 8 constituting the lid 6 are formed of a rubber material, as illustrated in Fig. 21, as in the case of a two-part configuration of the metal lid 106 and the resin tube seal 108, it is not necessary to remove the metal portion at the time of cleaning, and the opening and closing member can be integrally handled, so that it is possible to perform the round washing by the automatic cleaning. In addition, since both the top surface portion 7 and the grip portion 8 constituting the lid 6 are not made of metal but made of a rubber material, the manufacturing cost can be finished at low cost. In addition, since the inside is sealed by tightening the container main body 4 by the elastic force of the grip portion 8, it is possible to reduce decrease in the degree of sealing due to leakage of the fluid as compared with the case of pressing the extending portion 4b by the restoration pressure of the tube seal 108 as illustrated in Fig. 21.

In addition, since the lid 6 can be attached to and detached from the container main body 4 by depressurizing the space 8c of the second grip portion 8b to a negative pressure at the time of opening and closing the lid 6, the structure of sealing and releasing the sealing of the container 2 can be simplified, and the opening and closing operation of the lid 6 can be facilitated. In addition, since the clamp band is not interposed, the lid 6 can be opened and closed by one opening and closing robot 10, and the cost of the robot arranged in the solid sawmill can be reduced.

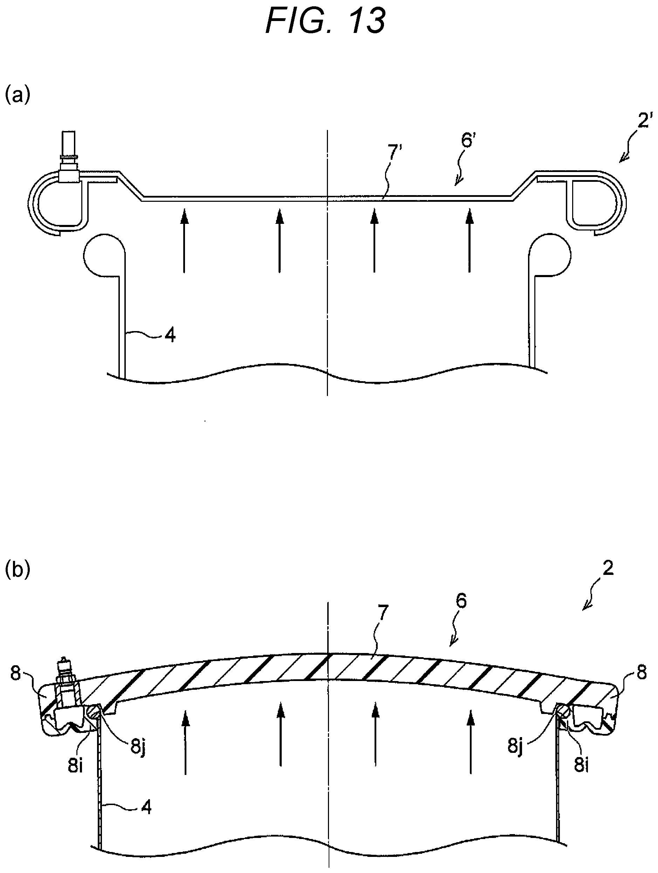

Further, as illustrated in Fig. 13(a), when the internal pressure of the container 2' is increased, in the case where the top surface portion 7' is made of metal, the lid 6' is lifted as it is and detached from the container main body 4', but as illustrated in Fig. 13(b), by making both the top surface portion 7 and the grip portion 8 of the container 2 made of rubber, the top surface portion 7 is pushed up with the recess 8j as a fulcrum, so that the lid 6 can be prevented from being detached from the container main body 4. In addition, when the internal pressure of the container 2 increases, the jaw portion 8i enters the inner peripheral side and grips the extending portion 4b so as to hold the extending portion 4b from below, so that the pressure resistance of the container 2 can be increased.

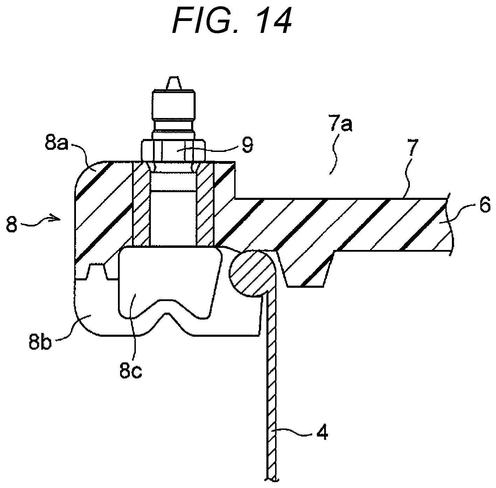

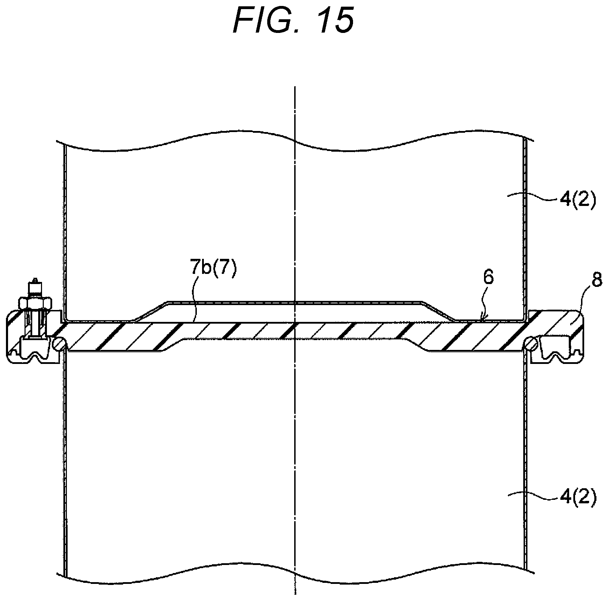

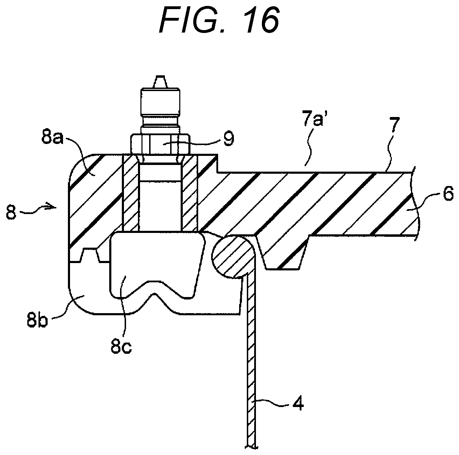

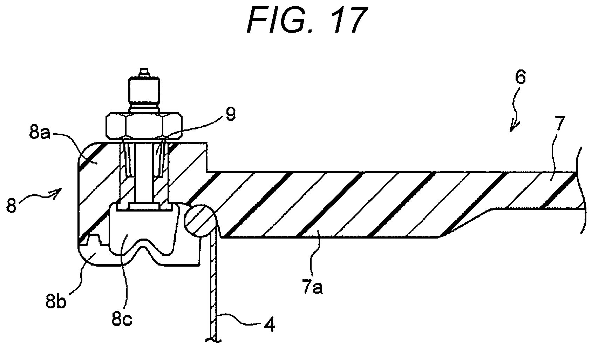

Note that, in the above-described embodiment, as illustrated in Fig. 14, the upper surface of the top surface portion 7 may be one step lower than the upper surface of the first grip portion 8a. That is, the recess 7b may be formed on an upper surface of the top surface portion 7. Thus, as illustrated in Fig. 15, the container main body 4 can be easily loaded on the lid 6. In this case, the depth of the recess 7b can be adjusted, and as illustrated in Fig. 16, the depth of the recess 7b can be made shallower than that illustrated in Fig. 14. In addition, as illustrated in Fig. 17, the width of the protrusion 7a may be increased and widened toward the center of the lid 6.

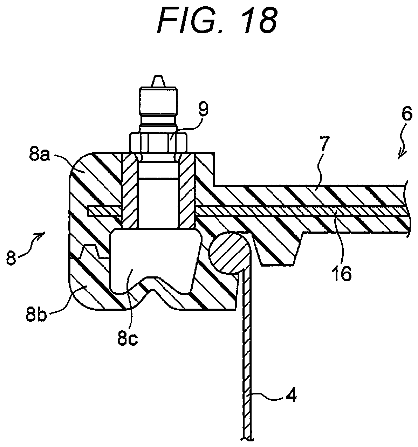

Further, as illustrated in Fig. 18, a layer 16 made of metal may be provided on the first grip portion 8a and the top surface portion 7. The layer 16 made of metal is embedded in a rubber material constituting the lid 6. Specifically, an upper surface, a lower surface, and a circumferential surface of the layer 16 made of metal are all in contact with the rubber material. Thus, the strength of the lid 6 can be enhanced, and for example, the lid 6 can be prevented from bending even when the container main body 4 is further loaded on the lid 6. In addition, it is possible to prevent a situation in which the grip portion 8 hangs down and the depressurization path 9 is inclined toward the outer peripheral side and the depressurizing unit 10c cannot be attached to the depressurization path 9. Note that, in this case, since the rigidity of the lid 6 is secured by providing the layer 16 made of metal, the hardness of the first grip portion 8a, the second grip portion 8b, and the top surface portion 7, that is, the hardness of the rubber material can all be the same.

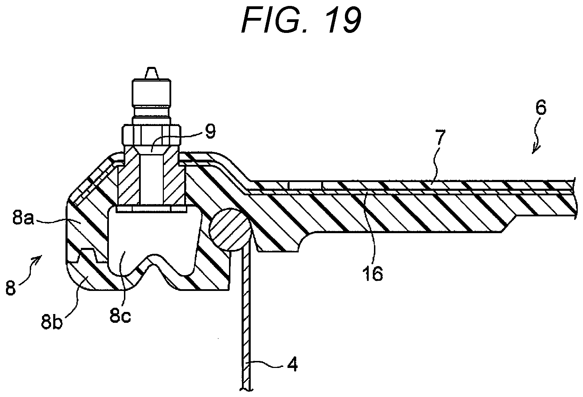

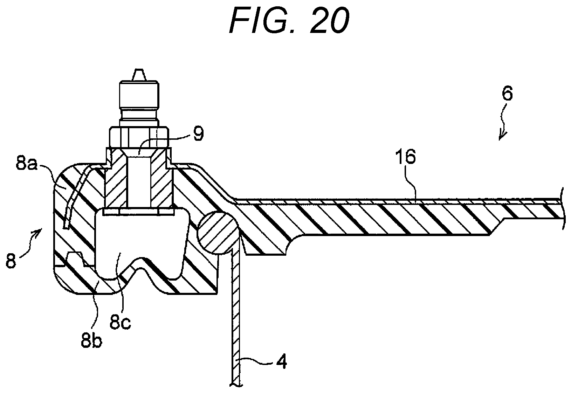

Note that the layer 16 made of metal does not necessarily need to be provided at a deep position between the first grip portion 8a and the top surface portion 7, and may be formed, for example, between surface layers as illustrated in Fig. 19, or may be provided on outer surfaces of the first grip portion 8a and the top surface portion 7 as illustrated in Fig. 20. In this case, the end of the layer 16 made of metal may be embedded in the lid 6. Thus, a joint between the metal and the rubber material is not formed on the outer surface of the lid 6, and there is no room for the formulation to remain on the outer surface of the lid 6.

Further, in the above-described embodiment, the case where the lid 6 is opened and closed by the opening and closing robot 10 has been described, but the present invention is not limited thereto. For example, the lid 6 may be manually opened and closed by an operator. In this case, the protrusion 7a illustrated in Fig. 2 has an alignment function. For example, when the lid 6 is placed on the opening 4a by a human hand, if the lid 6 is misaligned, the protrusion 7a is positioned on the extending portion 4b, the balance is lost, and rattling occurs, and the operator is made to recognize that the lid 6 is attached obliquely. When all of the protrusions 7a are located in the extending portion 4b, the lid 6 is closed and rattling is eliminated. This facilitates alignment of the lid 6. Note that the clearance A (see Fig. 2) between the extending portion 4b and the protrusion 7a in the closed state is preferably equal to or less than 1.5 mm, but more preferably equal to or less than 1 mm.

Note that, in the above-described embodiment, the grip portion 8 having, at the lower end, the second grip portion 8b in which the inner protrusion 8g and the protruding bottom portion 8h having an inverted M cross-sectional shape are formed has been described as an example, but the shape of the grip portion 8 may not necessarily have such a shape as long as the container 2 can be sealed when the lid 6 is closed, and for example, the shape of the portion corresponding to the second grip portion 8b may be a substantially circular cross section.

In the above-described embodiment, the case where the grip portion 8 is disposed along the outer peripheral surface of the container main body 4 when the lid 6 is closed has been described, but the present invention is not limited thereto. The grip portion 8 may be disposed along the inner peripheral surface of the container main body 4 when the lid 6 is closed.

Further, in the above-described embodiment, the layer 16 made of metal is not necessarily limited to metal, and it is sufficient that the lid 6 can be prevented from bending, and it is sufficient that the layer is formed of a high hardness member having hardness higher than at least a rubber material. Specifically, it is preferable that the layer 16 is formed of a member having hardness larger than hardness of the top surface portion 7 or the grip portion 8.

### Reference Signs List

- 2: Container
- 4: Container main body
- 4a: Opening
- 4b: Extending portion
- 6: Lid
- 7: Top surface portion
- 7a, 7aA, 7aB, 7aC, 7aD: Protrusion
- 7b: Recess
- 721: Inner surface annular region
- 721a: Protruding region portion
- 721b: Flat region portion
- 722: Inner surface inner region
- 8: Grip portion
- 8a: First grip portion
- 8b: Second grip portion
- 8c: Space
- 8d: Joint portion
- 8e: Joint portion
- 8g: Side protrusion
- 8h: Protruding bottom portion
- 8i: Jaw portion
- 8j: Recess
- 9: Depressurization path
- 10: Opening and closing robot
- 10a: Grip portion
- 10b: Arm
- 10c: Depressurizing unit
- 10d: Opening/closing unit
- 10e: Guide
- 10f: Vertical movement unit
- 12: Workbench
- 14: Shelf
- 16: Layer made of metal
- 90: Flow path
- 92: Valve
- 93: Switching pin (switching unit)
- 106: Lid
- 108: Tube seal
- AZ: Central axis

## Claims

1. An opening and closing member that opens and closes an opening by being attached to and detached from the opening of a container main body, the opening and closing member comprising: a top surface portion that covers the opening in a closed state where the opening is closed; a grip portion that extends to an outer edge of the top surface portion and grips an outer periphery of an opening end of the container main body in the closed state; and a depressurization path that penetrates into a tubular space formed in the grip portion and is attached to the grip portion, and depressurizes the space, wherein the top surface portion has an inner surface facing an inside of the container main body in the closed state where the opening is closed, the inner surface includes an annular inner surface annular region extending along an inner periphery of the opening end of the container main body, and the inner surface annular region includes a protruding region portion provided with one or a plurality of protrusions protruding from the inner surface, and a flat region portion where the protrusion is not provided.

2. The opening and closing member according to claim 1, wherein a shape of the top surface portion is a disk, and the protruding region portion is provided with a first protrusion and a second protrusion arranged so as to sandwich a central axis of the top surface portion.

3. The opening and closing member according to claim 1 or 2, wherein an area of the flat region portion occupying the inner surface annular region is larger than an area of the protruding region portion occupying the inner surface annular region.

4. The opening and closing member according to any one of claims 1 to 3, wherein the inner surface of the top surface portion further includes an inner surface inner region surrounded by the inner surface annular region, and the flat region portion of the inner surface annular region is flush with the inner surface inner region.

5. The opening and closing member according to any one of claims 1 to 3, wherein the inner surface of the top surface portion further includes an inner surface inner region surrounded by the inner surface annular region, and a step is present between the flat region portion of the inner surface annular region and the inner surface inner region.

6. The opening and closing member according to any one of claims 1 to 3, wherein the inner surface of the top surface portion further includes an inner surface inner region surrounded by the inner surface annular region, and the flat region portion of the inner surface annular region protrudes from the inner surface inner region.

7. The opening and closing member according to any one of claims 1 to 6, wherein the depressurization path includes a main body provided with a through hole penetrating the tubular space of the grip portion, a valve that switches the through hole between a closed state and an open state, a switching unit that brings the valve into the open state when receiving a pressing force and brings the valve into the closed state when the pressing force is removed, and an elastic force applying portion that presses the valve against an opening of the through hole.
